# EUROPÄISCHE PATENTSCHRIFT

(11) **EP 0 711 213 B1**
(45) Veröffentlichungstag und Bekanntmachung des Hinweises auf die Patenterteilung: **03.05.2000**
(21) Anmeldenummer: 95922482.5
(22) Anmeldetag: 24.05.1995
(51) Int. Cl.: B22C 7/02, B22C 9/00

(54) **VERFAHREN FÜR DEN EINSATZ IN DER GIESSEREITECHNIK**
PROCESS FOR USE IN FOUNDRY PRACTICE
PROCEDE S'UTILISANT EN FONDERIE

(30) Priorität: 27.05.1994 DE 4418466; 11.11.1994 DE 4440397
(43) Veröffentlichungstag der Anmeldung: 15.05.1996
(60) Teilanmeldung: 99115839.5
(73) Patentinhaber: EOS GmbH ELECTRO OPTICAL SYSTEMS, 82152 Pasing (DE)
(72) Erfinder: WENDT, Florian, Dr.-Ing., D-09599 Freiberg/Sa. (DE); LANGER, Hans, D-82166 Gräfelfing (DE); WILKENING, Christian, D-86911 Diessen (DE); KELLER, Peter, D-82152 Martinsried (DE)
(74) Vertreter: Prüfer, Lutz H., Dipl.-Phys.
(86) Internationale Anmeldenummer: EP9501994
(87) Internationale Veröffentlichungsnummer: WO9532824

(56) Entgegenhaltungen:
- DE-C- 4 300 478
- DE-C- 4 410 046
- FR-A- 2 678 532
- US-A- 4 247 508
- US-A- 4 752 352
- US-A- 5 156 697
- TECHNISCHE RUNDSCHAU, Band, Nr. 11, 1991, Von Hans-J~rgen Ott, "Stereolithographie-lasergeformte Prototypen ohne Werkzeug und Form"

## Beschreibung

Die Erfindung betrifft ein Verfahren zum Herstellen einer Gußform aus Formsand gemäß Oberbegriff des Anspruchs 1, welcher auf der FR-A-2 678 532 basiert.

Es sind Verfahren für die schnelle Herstellung von dreidimensionalen, geometrisch komplizierten, auch mit Hinterschneidungen versehenen und genauen Objekten bekannt, die ohne Urformwerkzeuge, d.h. ohne die bereits körperlich vorhandene äußere und innere Form der Objekte als Positiv- oder Negativmodell sowie auch ohne Zerspanungs- und Abtragvorgänge arbeiten und die gewünschten Objekte direkt aus der computerinternen, dreidimensionalen Darstellung der Geometrie generieren, wobei als Ausgangsstoffe feste, pulverförmige oder flüssige Grundmaterialien dienen. Diese Verfahren sind als generative Fertigungsverfahren, Rapid Prototyping RP, Solid Freeform Manufacturing SFM oder Fast Free Form Fabrication FFFF bekannt (Technische Rundschau 83(1991)20,S.36-43 und 44,S.58-61, Ma-terials World Dec.1993,S.656-658, modern casting Oct.1993,S.25-27). Das bekannteste dieser Verfahren ist die Stereolithographie (Konstruieren+Gießen 17(1992)4,S.13-19, Technische Rundschau 82(1991)11,S.40/41, Automobil-Produktion Aug.1992,S.102/104, Laser-Praxis Mai 1992,S.LS58/LS59).

Mit diesen Verfahren können Prototypen, Musterteile usw. aus verschiedenen Kunststoffen, beschichtetem Papier sowie aus Wachs hergestellt werden. Verschiedene Materialien sind geeignet, die aus ihnen hergestellten Objekte als verlorene Modelle im Feingußverfahren zu verwenden, so daß in der Folge auch Gußteile im Feingußverfahren ohne Urformwerkzeug hergestellt werden können. Weiterhin ist bekannt, daß durch das Verfahren des Selective Laser Sintering SLS auch metallische und keramische Objekte direkt ohne Urformwerkzeuge hergestellt werden können (Int.J.of Powder Metallurgy 28(1992)4,S. 369-381, Metallurgical Transactions A 24/1993,S.757-759).

Ein unter dem Namen Selektive Laser Sintering bekanntes Verfahren ist aus der DE 43 00 478 C1 bekannt. Mit diesem Verfahren können dreidimensionale Objekte durch aufeinanderfolgendes Verfestigen einzelner Schichten des zu bildenden Objekts aus pulverförmigem verfestigbarem Material durch Einwirkung von Laserstrahlung an jeweils den dem Objekt entsprechenden Stellen jeder Schicht erzeugt werden. Die Erzeugung von dreidimensionalen Objekten durch Laser Sintering von Metall- oder Keramikpulver ist bekannt.

Die beim Verfahren des Selective Laser Sintering verwendeten Pulver sind dabei keramischer Natur, aus zwei Komponenten A und B bestehend, und die Bindung zwischen den Partikeln wird durch keramische Bindung, d.h. also chemische Reaktion zwischen den Bestandteilen des Pulvers, hergestellt.

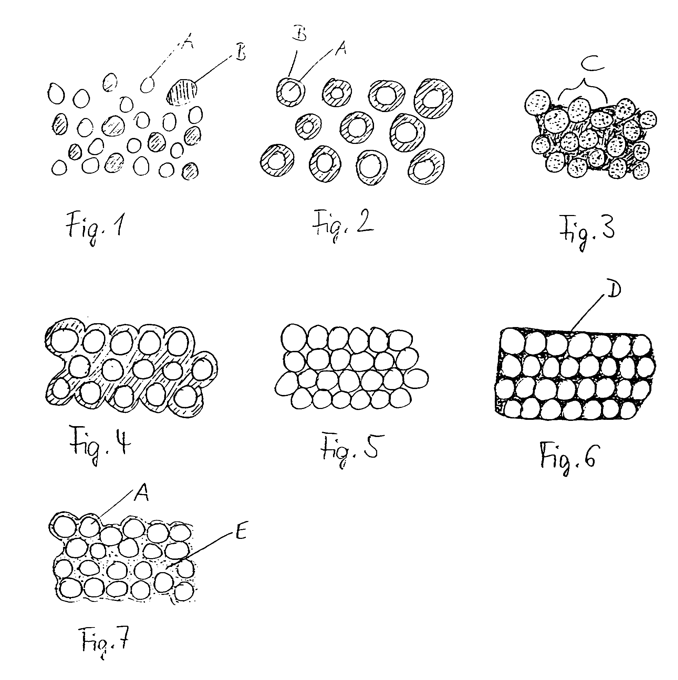

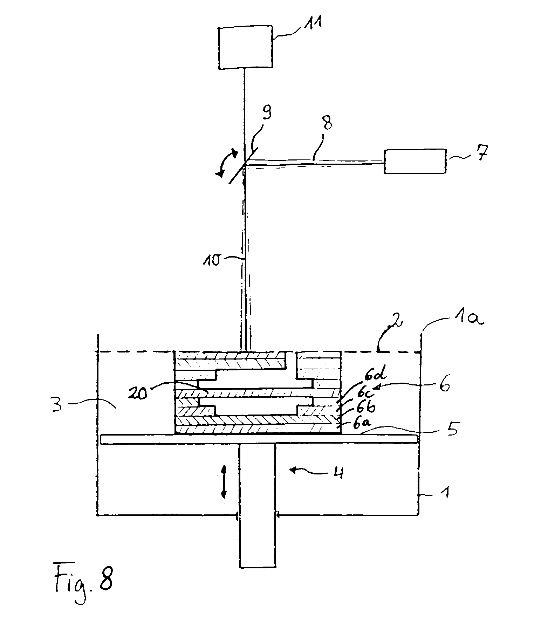

Bekannt ist die Verwendung von Tonerde in Verbindung mit Ammonium-Dihydrogenphosphat oder Fluorphosphatglas-Pulver als Binder, wobei die jeweils verwendete der beiden letzteren Substanzen durch Laserstrahlung in eine Glasphase aufgeschmolzen wird, die körnige Tonerde infiltriert und durch Erstarrung die Bindung mit einer bestimmten Grünfestigkeit herstellt. Danach wird der entstandene Körper außerhalb der Selective Laser Sintering-Anlage für mehrere Stunden einer Temperatur von über 800 Grad Celsius ausgesetzt, wodurch die beiden Komponenten endgültig zu einer keramischen Bindung hoher Dichte, Festigkeit, Härte und Schmelztemperatur reagieren (Brennprozeß, Firing). Die beiden Komponenten können dabei miteinander gemischt sein (Fig.1), oder eine Komponente ist mit der anderen umhüllt (Fig.2); wobei in jedem Fall nach dem Brennprozeß ein keramisch gebundener Körper (Fig.3) entsteht. Typisch für alle bisher bekannten Ausführungsformen dieses Prozessen ist die Einbeziehung der in der Selective Laser Sintering-Maschine zunächst nicht aufgeschmolzenen Komponente A in die beim Brennprozeß ablaufende chemische Reaktion, in deren Ergebnis der keramische Körper C entsteht. Weiterhin typisch sind die hierfür benötigten hohen Temperaturen und langen Brennzeiten und die vorgeschlagene Verwendung des entstandenen keramischen Körpers als Formschale oder Kern für den Feingießprozeß. Ebenso wird bei Verwendung anderer Materialien ein gleichartiges keramisches Teil erzeugt.
(3rd.Int.Conf.on Rapid Prototyping at the University of Dayton, Conf.Proceedings, Dayton, Ohio, 1992,S.73-77; Solid Freeform Fabrication Symposium Proceedings, University of Texas at Austin, Texas, 1991,S.195-205,205-212,u.1992,S.44-53,63-71,124-130,141-146; US-Patents No.5.156.697,5.147.587, 4.944.817, Europa-Patentanmeldung Nr.0.416.852.A2).

Auf die gebräuchlichste Anwendung der Methode des Selective Laser Sintering, das Versintern von Kunststoffpulvern durch oberflächliches Aufschmelzen und Zusammenbacken der Teilchen, soll hier nicht weiter eingegangen werden, da die damit hergestellten Objekte für das Sandgußverfahren nicht direkt, d.h. nicht als verlorene Formen und Kerne, anwendbar sind. Ebenso wird nicht auf die bekannte Verarbeitung von Wachspulvern eingegangen, da die damit hergestellten Objekte ausschließlich für den Einsatz als verlorene Modelle (Positive) im Feingußverfahren geeignet sind.
(US-Patents No.5.155.324, 5.053.090, 5.076.869, 5.132.143, 5.017.753, 4.863.538, Weltpatent-Anmeldung PCT/US87/02635 (Internat.Publ.No.W088/02677).

Im Falle versinterter metallischer Pulver sind die metallischen Teilchen mit polymeren Bindern, wie z.B. Epoxidharzen, umhüllt (Fig.2) oder vermischt (Fig.1), so daß die vorübergehende Bindung zur Erreichung der Grünfestigkeit der Objekte über diesen polymeren Binder hergestellt wird. Es kommt dabei während der Belichtung des Materials in der Selective Laser Sintering-Maschine nur zu einer Verfestigung durch oberflächliches Aufschmelzen des Polymers, Infiltration der Metall-/Keramik-Teilchen und nachfolgendes Verkleben der Partikel bei Abkühlung (Fig.4). Eine chemische Reaktion findet dabei nicht statt. Außerhalb der Selective Laser Sintering-Maschine wird danach durch eine Wärmebehandlung der Polymerbinder ausgetrieben, wobei die Metallteilchen bei wesentlich höheren Temperaturen miteinander versintern (Fig.5). Danach kann der noch immer poröse Körper mit einem niedrigschmelzenden Sekundärmetall D infiltriert werden, um die endgültige Dichte und Festigkeit herzustellen Fig.6). Über das gleiche Verfahrensprinzip wird auch bei keramischen Pulvern berichtet.
(Solid Freeform Fabrication Syposium Proceedings, University of Texas at Austin, s.o.)

Daneben sind noch Bindungen über intermetallische Verbindungen beschrieben (ebenda), zu deren Herstellung es jedoch stärkerer Laser und damit einer höheren eingebrachten Leistung bedarf. Die Verwendung derartig hergestellter metallischer und keramischer Teile als verlorene Formen und Kerne im Sandgußverfahren ist nicht möglich.

Weiterhin ist bekannt, daß keramische Formen für das Feingußverfahren auch durch die selektive Verfestigung von keramischen Pulvern mittels aus einer beweglichen Düse ausgedrückten silikatischen Binders im sogenannten Direct Shell Production Casting hergestellt werden können (modern casting March 1993,S.55 u.Aug.1993,S.30/31, Plastics World Febr.1993,S.23). Hierbei handelt es sich um eine chemische Reaktion mit dem Ergebnis einer keramischen Bindung, die dadurch selektiv zustande kommt, daß nur an den gewünschten Stellen die Binderkomponente B der flächig aufgetragenen Basiskomponente A zugefügt wird. Auf diese Art und Weise können ebenfalls keine verlorenen Kerne und Formen für das Sandgußverfahren gefertigt werden.

Es ist weiterhin bekannt, daß schmelzbare Partikel verwendet werden können, die in Analogie zum Prozeß des Selective Laser Sintering lagenweise aufgetragen und in jeder Lage entsprechend der Kontur des zu bauenden Teiles von einem Laser aufgeschmolzen werden werden und durch Sintern das zu bauende Teil ergeben. Die schmelzbaren Teilchen können dabei aus Kunststoff, Kunststoff-umhülltem Sand oder schmelzbaren Sandteilchen selbst bestehen. In letztem Fall muß der Laser über eine genügende Leistung verfügen, um Sand zu schmelzen. Es ist nicht bekannt, daß die derartig hergestellten Objekte als verlorene Formen und Kerne beim Sandgußverfahren von Metallen Verwendung finden können. (US-Patent No.4.247.508)

Es ist nicht bekannt, daß gießereitaugliche verlorene Formen und Kerne aus anderen als keramischen Materialien mittels generativer Fertigungsverfahren ohne die Verwendung von Urmodellen hergestellt werden können. Damit sind alle derart ohne Urformwerkzeuge hergestellten Formen und Kerne in ihrer gießereitechnischen Anwendung bisher auf das Feingußverfahren beschränkt, und für das weit verbreitete Sandgußverfahren steht kein schnelles Formverfahren zur Verfügung, das ohne Urformwerkzeuge (Modelle und Kernkästen) arbeitet.

Es ist bekannt, daß warm- und heißhärtende Formstoffe zur Herstellung von Kernen und Formen für die Gießereiindustrie verwendet werden können, wobei die hergestellten Kerne und Formen mit nahezu allen bekannten Gußwerkstoffen abgegossen werden können. Diese Formstoffe bestehen aus einem Formgrundstoff, aus einem Binder und ggf. Zusätzen. Diese Formstoffe können jedoch bisher nur unter Verwendung von Urformwerkzeugen wie Modelleinrichtungen und Kernkästen, die ganzheitlich aus Metall bestehen müssen, verarbeitet werden (Flemming/Tilch : Formstoffe und Formverfahren,Dt.Verl.f.Grundstoffind. Leipzig/Stuttgart, 1.Aufl.1993,S.333-367, s.a.S.105 ff.).

Von Ausnahmen mit rückläufiger Einsatztendenz abgesehen (Kernbackverfahren, a.a.O., S.333-338), handelt es sich dabei um Verfahren mit chemisch aushärtenden Bindersystemen, wobei die chemische Härtungsreaktion durch Wärmezufuhr von außen eingeleitet und vorangetrieben wird. Der Formgrundstoff A, der an der Härtungsreaktion nicht teilnimmt und sich chemisch inert verhält, kann dabei mit dem chemisch reagierenden Binder B gemischt (Fig.1) oder unhüllt (Fig.2) sein.

Als Formgrundstoff sind alle dafür in der Gießerei verwendeten Materialien geeignet, also Quarzsand (mineralisch als Tiefquarz, Hochquarz, Cristobalit oder Tridymit oder auch als amorpher Quarz), Zirkon-, Olivin, Chromit- oder Kohlenstoff-(Carbon-)Sand, Schamotte oder Korund. Der Formgrundstoff kann dabei pulverförmig, körnig oder granuliert sein und kann aus runden, unregelmäßig geformten oder eckigen, splittrigen Partikeln bestehen; desweiteren kann er neu sein oder auch durch Regeneration oder einfache Wiederverwendung aus bereits gebrauchtem Formmaterial gewonnen werden. Er kann eine sehr enge oder auch eine weite Korngrößenverteilung aufweisen, d.h. in seiner Korncharakteristik einem synthetischen Ein-Korn-Sand oder einem Gemisch verschiedener Korngrößen, wie etwa in natürlichen Lagerstätten vorliegend, entsprechen. Mischungen verschiedener der o.g. Substanzen zu einem Formgrundstoff sind möglich.

Als Binder werden für die warm- und heißhärtenden Verfahren verschiedene organische Binder verwendet. Zum Einsatz kommen Phenolharze (Novolake oder Resole), Furanharze, Harnstoffharze, Aminoharze, Harnstoff-Formaldehydharze, Furfurylalkohol-Harnstoff-Formaldehydharze, phenolmodifizierte Furanharze, Phenol-Formaldehydharze oder Furfurylalkohol-Phenol-Formaldehydharze. Eine Aushärtung durch Wärmezufuhr ist auch möglich für Formstoffsysteme mit Epoxidharz- und Acrylharz-Bindern; diese werden jedoch aus Produktivitätsgründen z.Zt. im wesentlichen mittels Gashärtung (Schwefeldioxid) verarbeitet. Die Auswahl des Binders ist dabei von den Spezifika des Gußwerkstoffs und des Gußteils sowie von den Qualitäts-, Prozeß-, Preis- und Produktivitätsanforderungen abhängig. In Abhängigkeit von diesen Anforderungen können je nach Anwendungsfall auch noch einer oder mehrere Zusätze notwendig sein. Je nach Verarbeitungsverfahren und zur Verfügung stehender Anlagentechnik sowie in Abhängigkeit vom Einsatzzweck kann der Binder vor dem Umhüllungs- oder Mischvorgang flüssig, fest, granuliert oder pulverförmig vorliegen und modifiziert und/oder gelöst sein.

Die Aushärtung und damit Verfestigung der aus Formgrundstoff und Bindersystem bestehenden Formstoffe erfolgt durch chemische Reaktion des Bindersystems, an der der Formgrundstoff (mit einem Anteil von etwa 85-99 Masse-% vom gesamten Formstoff) nicht teilnimmt. Zugrundeliegende Aushärtereaktion ist die Polykondensation der schon unterschiedlich stark vorkondensierten Harze durch Wärmezufuhr von außen, wobei sich räumlich stark vernetzte Makromoleküle bilden, die unter Einschluß der Formgrundstoff-Komponente A den Zusammenhalt in dem nun verfestigten Formstoff ergeben. Diese Polykondensationsreaktion ist irreversibel, und die entstandene Binderkomponente E (Fig.7) hat chemisch andere Charakteristika als in ihrer Ausgangsform B (Fig.1 und Fig.2), während die Formgrundstoff-Komponente A nicht an der Reaktion beteiligt war und unverändert vorliegt.

Eines der bekanntesten heißhärtenden Formverfahren für den Gießereieinsatz ist das Maskenformverfahren nach Croning, beschrieben in Meyers Lexikon Technik und exakte Naturwissenschaften, Bd. 2, Bibliographisches Institut Ag, Mannheim 1970, Seite 1150 ff, das zur Fertigung von Formen und Kernen dient, wobei harzumhüllte, trockene und rieselfähige Formstoffe auf bzw. in einem aufgeheizten Urformwerkzeug ausgehärtet werden.

Bei diesem Verfahren werden mit Hilfe von Modelleinrichtungen schalenförmige Formen von etwa einheitlicher Dicke, sogenannte Masken, gefertigt, und je zwei Masken werden zur Gießform zusammengefügt, in die der Abguß erfolgt. Die aus Metall gefertigten und auf einer aus Metall gefertigten sog. Modellplatte befestigten Modellteile werden dabei über die Platte auf 200 bis 400 °C vorgewärmt und der trockene, rieselfähige Formstoff (bestehend aus Formgrundstoff, der mit dem Bindersystem umhüllt ist) wird auf die Modellplatte aufgeschüttet. Nachdem unter der Einwirkung der von der Modellplatte abgegebenen und in die Formstoffschüttung eingeleiteten Wärme im Formstoff bis zu einer bestimmten Tiefe, die proportional der zur Wärmeleitung verfügbaren Zeit ist, die oben beschriebene chemische Aushärtereaktion (Polykondensation) angelaufen und bis zu einem bestimmten Vernetzungsgrad fortgeschritten ist, wird der überschüssige Formstoff abgekippt und die verbliebene Formstoffschicht (die Maske) unter zusätzlicher Wärmezufuhr über die Rückseite (z.B. mittels Gasbrenner) fertig ausgehärtet, wonach die Maskenformhälfte von der Modelleinrichtung abgenommen wird. Nach dem gleichen Prinzip können (hohle) Maskenkerne gefertigt werden, wobei der Wärmeeintrag über die Außenkontur vom Kernkasten erfolgt und der innen unausgehärtet verbliebene Formstoff ausgeschüttet wird. Die beiden Maskenformhälften sowie ggf. zusätzliche Kerne werden anschließend zu der Gußform zusammengefügt, evtl. verklebt, verklammert und/oder hinterfüllt und sind bereit zum Abguß. Während des Gießvorgangs verbrennt das Kunstharz und der Sand kann anschließend vom Gußteil leicht entfernt werden.

Ein weiteres bekanntes Sandgußverfahren ist das Kastenformverfahren, beschrieben in der oben genannten Referenz.

Die Formen für komplizierte Sandgußteile bestehen in der Regel aus zwei Maskenformhälften oder mehrteiligen Formkästen mit einem oder mehreren eingelegten Kernen. Jeder dieser Bestandteile der Form muß so einfach aufgebaut sein, daß er nach seiner Herstellung aus seinem Kernkasten ausgeformt (entnommen) bzw. von seiner Modellplatte abgehoben werden kann. Durch diesen Zwang zur Vereinfachung steigt die Anzahl der notwendigen Kerne. Für komplizierte Gußteile, wie beispielsweise Zylinderköpfe im Motorenbau, sind zwischen fünf und zwanzig Einzelkerne erforderlich, die entweder einzeln in die beiden Formkästen eingelegt werden oder vorher zu einem Kernpaket zusammengesetzt werden.

Das bekannte Verfahren weist die folgenden Nachteile auf:
1. Für jeden Kern muß ein mindestens zweiteiliger Kernkasten hergestellt werden, was speziell im Prototypenstadium äußerst zeit- und arbeitsaufwendig ist. Für die Maskenformen wird eine beheizbare Modellplatte benötigt.
2. Jede Fügestelle zwischen den Kernen bzw. zwischen der Maskenform und dem Kern ist mit Toleranzen behaftet, so daß die Gesamtgenauigkeit des Aufbaus für präzise zu fertigende Gußteile nicht ausreicht.
3. Die konstruktive Ausführung der Fügestellen bzw. Kernlager zur Festlegung der Position jedes Kernes stellt einen zusätzlichen Aufwand dar.

Die beim Maskenformverfahren ablaufende chemische Reaktion soll beispielhaft für die Gruppe der warm- und heißhärtenden Formstoffe näher erläutert werden; bei anderen Bindersystemen können Variationen zu dem im folgenden beschriebenen, allgemeingültigen Grundprinzip auftreten.

Als Binder für Maskenformstoffe werden Phenolharze verwendet, die meist vom Novolak-Typ sind. Sie besitzen bereits einen hohen Anteil vernetzter Moleküle; der bei Harzherstellung und Umhüllung des Formgrundstoffs mit dem Harz begonnene Vernetzungsvorgang wurde vorzeitig abgebrochen. Dem Formstoff wurde bei der Umhüllung Hexamethylentetramin zugemischt, das Träger von Formaldehyd ist und dieses unter Wärmeeinwirkung freisetzt. Durch dieses Formaldehyd vollzieht sich unter der Einwirkung von Wärme die weitere Aushärtung und Vernetzung des Harzes. Dabei geht des Harz aus dem ursprünglichen A-Resol-Zustand (schmelzbar) über den B-Resitol-Zustand (plastisch) irreversibel in den C-Resit-Zustand (gehärtet, nicht schmelz-bar) über, wobei dieser letzte Zustand nicht vollständig erreicht wird. Etwa 10 bis 15 % des Harzbinders verbleiben in den Zuständen A-Resol und B-Resitol und geben dem Formteil eine gewisse Rest-Plastizität, was die problemlose gießereitechnische Verarbeitung des Formteils gestattet (z.B. ist ein Richten sofort nach der Entnahme aus dem Urformwerkzeug noch möglich). Jedoch ist die Reaktion weit genug fortgeschritten, um den irreversiblen, gehärteten Zustand und die damit verbundene hohe Festigkeit größtenteils zu erreichen. Eine Wärmebehandlung ist in der Regel nicht mehr erforderlich. Wird sie dennoch durchgeführt (für wenige Minuten bei Temperaturen zwischen 150 und 250 Grad Celsius), um z.B. noch die letzten Reste an gasförmigen Reaktionsprodukten und Wasserdampf aus den Formteilen zu entfernen und dadurch bei empfindlichen Gußteilen Gasfehler zu vermeiden, so führt diese Wärmeeinwirkung nicht zur Lösung einer reversiblen Klebeverbindung zwischen den Formstoffpartikeln und damit zur Zerstörung des Formteils, sondern erhöht die Festigkeit durch vollständigere Aushärtung im irreversiblen C-Resit-Zustand.

Die für die Aushärtung der hier relevanten Formstoffbinder notwendige Wärmeenergie wird dabei über das auf ca. 200-400 Grad Celsius (je nach Bindertyp und Geometrie des Formteils) aufgeheizte Urformwerkzeug (Modell, falls eine Außenform hergestellt wird; Kernkasten, falls ein Kern hergestellt wird) in den Formstoff eingebracht. Dieser Wärmeeintrag erfolgt über Wärmeleitung von außen in die Tiefe des Formstoffs hinein. Wegen der relativ schlechten Wärmeleitfähigkeit der meisten Formgrundstoffe ist diese Wärmeleitung ein zeitaufwendiger Vorgang, was einerseits die Produktivität des Verfahrens und andererseits die zweckmäßige Einstellung der Formstoffeigenschaften beeinflußt. So ist eine bestimmte Verweilzeit in dem Urformwerkzeug nötig, um die Wärme in das Volumen des Formteils hineinleiten zu können; in dieser Zeit darf die äußere Schale des Formteils, die dem wärmeabgebenden Kernkasten direkt benachbart und deshalb der stärksten Wärmeeinwirkung ausgesetzt ist, nicht verbrennen. Die Reaktivität des Formstoffs ist entsprechend einzustellen, was immer einen Kompromiß der Formstoffeigenschaften und Verfahrensparameter einschließt. Bedingt durch die o.g. Temperaturen des Urformwerkzeugs und dessen Aufheizung z.B. mittels direkter Gasflamme kommen hierfür nur ganz aus Metall (meist höherfesten Stählen) gefertigte Werkzeuge in Frage.

Wegen der mit warm und heiß aushärtenden Formstoffen zu erzielenden guten Gußteileigenschaften, wie hohe Maßgenauigkeit und Qualitätskonstanz sowie gute Oberflächenqualität, sind diese Formstoffe unter den Verfahren zur Form- und Kernherstellung für anspruchsvolle, hochqualitative Gußteile weit verbreitet, insbesondere bei der Fertigung von Gußteilen für die Automobilindustrie, den Fahrzeugbau, die Hydraulikindustrie und den Maschinenbau. Das betrifft sowohl Aluminium und Gußeisenlegierungen wie auch den Stahlguß. Jedoch haben alle mit diesen Formstoffen arbeitenden Gießereien das Problem, daß ggf. vom Kunden angefragte Einzelteile, Prototypen, Kleinserien, Musterteile etc. nur sehr teuer und mit hohem zeitlichen Aufwand zu fertigen sind, da in jedem einzelnen Fall ein komplett aus Metall bestehendes Urformwerkzeug (Modell und/oder Kernkasten) gefertigt werden muß. Wegen der heißen Verarbeitung dieser Formstoffe entfallen billige Methoden des Modellbaus (Holz- oder Epiloxmodell), und eine Herstellung der Musterteile in anderen Formstoffen mit billigen Modelleinrichtungen würde keinen Vergleich zwischen diesen Musterteilen und der späteren Großserie in heißhärtenden Formstoffen in Bezug auf die Qualitätsparameter der gefertigten Gußteile mehr gestatten. Die mit den Vollmetall-Werkzeugen verbundenen Kosten und Vorbereitungszeiten stellen somit eine starke Benachteiligung der Gießereien, die mit warm und heiß härtenden Formstoffen arbeiten, gegenüber anderen Formverfahren beim Wettbewerber dar; desweiteren verursachen sie auch innerhalb der Gießerei selbst hohe Kosten und Zeitverluste in der Phase der technologischen Vorbereitung der Serienfertigung, wenn mehrere Probeabgüsse mit veränderten Geometrien des Gieß- und Speisesystems oder der Abmessungen des Gußteils notwendig sind.

Die vorstehend beschriebenen, bekannten Methoden der schnellen Form- und Kernfertigung für das Feingußverfahren auch in Sandgießereien anzuwenden, ist aus technologischen Gründen nicht zielführend. Es handelt sich bei Gußteilen, die für das Sandgußverfahren (gleichgültig in welchem Gußwerkstoff) konzipiert sind, um völlig andersartige Gußteile hinsichtlich ihrer Größe, Masse, Geometrie, Komplexität (Innenkonturen und damit Kernarbeit), geforderten Maßgenauigkeit, Oberflächenqualität und des Preises. Die im Feingußverfahren gefertigten Musterteile/Prototypen hätten keinerlei Beziehung zu der später im Sandguß vorgesehenen Serienfertigung und dienen damit weder dem Kunden (für Erprobung von Mustermotoren etc.) noch der Gießerei (zur technologischen Vorbereitung der späteren Serienfertigung). Durch andere Methoden des Rapid Prototyping, wie z.B. Stereolithographie, Selective Laser Sintering von Kunststoffen, Laminated Object Manufacturing von beschichtetem Papier, hergestellte Modelle sind unter den Bedingungen warm und heiß aushärtender Formverfahren wegen ihrer geringen Temperaturbeständigkeit und schlechten Wärmeleitfähigkeit nicht einsetzbar. Weitere Alternativen ohne den konventionellen Modellbau existieren nicht. Aus diesen Gründen werden in den in Frage kommenden Gießereien alle Vorserienversuche, Musterfertigungen etc. mit den der späteren Serienfertigung entsprechenden Metallmodellen unternommen, und die Nachteile bei Kosten (von mehreren Tausend DM für einen einfachen Kernkasten bis z.B. DM 100.000,-- für das Werkzeug für die Fertigung von Kurbelwellen) und Erstellungszeit des Urformwerkzeugs (ca. 3 Wochen für einen einfachen Kernkasten bis ca.12-16 Wochen für komplexe Werkzeuge z.B. für ein Zylinderkurbelgehäuse) müssen in Kauf genommen werden. In Anbetracht immer kürzerer Modellzyklen und Entwicklungszeiten verschlechtert dies insbesondere auch die Wettbewerbssituation des Fertigungsverfahrens Gießen gegenüber konkurrierenden Verfahren.

Aus der FR 2 678 532 ist ein Verfahren zum Herstellen eines dreidimensionalen Objektes durch Bilden einer ersten Schicht eines pulverförmigen Materials, Aufbringen eines Filmes eines polymerisierbaren Materials, Aufbringen einer zweiten Schicht eines pulverförmigen Materials und Bestrahlen mit einem Laserstrahl an den dem Objekt entsprechenden Stellen bekannt. Durch das Bestrahlen wird das polymerisierbare Material in dem bestrahlten Bereich polymerisiert und verbindet in diesem Bereich die Pulverkörner der ersten und zweiten Schicht miteinander. Die Schritte werden solange wiederholt, bis das dreidimensionale Objekt hergestellt ist.

Aus der DE 43 05 201 C1 ist ein Verfahren zum Herstellen eines Objektes bekannt, bei dem das Objekt schichtweise durch Aufbringen einer Schicht eines verfestigbaren Materials und anschließendes Verfestigen dieses Materials an den dem Objekt entsprechenden Stellen der Schicht durch Einwirkung einer elektromagnetischen Strahlung hergestellt wird, wobei das Material eine Kombination aus verfestigbarem Kunststoffmaterial mit einem Füllmaterial in Form von Keramik- oder Metallpulver verwendet wird.

Aus der US 4,944,817 ist ein Verfahren zum Herstellen eines Objektes bekannt, bei dem das Objekt schichtweise durch Aufbringen einer Schicht eines pulverförmigen Materials und anschließendes Verfestigen dieses Materials an den dem Objekt entsprechenden Stellen der Schicht durch Einwirkung einer elektromagnetischen Strahlung hergestellt wird. Als Material kann Quarzpulver, das mit einem Polymer beschichtet ist, verwendet werden.

Aus der US 4,618,924 und der US 4,641,270 ist es jeweils bekannt, beim Herstellen der Formen für das Spritzgußverfahren die Negativform durch Subtrahieren des Positivmodelles von einem Block zu erhalten.

Aufgabe der Erfindung ist es, ein Verfahren zum Herstellen einer Gußform aus Formsand zur Verfügung zu stellen, mit dem die Gußform schnell, genau und kostengünstig hergestellt werden kann.

Die Aufgabe wird durch das Verfahren nach Anspruch 1 gelöst.

Weiterbildungen der Erfindung sind in den Unteransprüchen angegeben.

Dadurch kann das Sortimentsprofil dieser Gießereien von der Fertigung in mittleren, großen bis sehr großen Serien, wie derzeit üblich, in den Losgrößenbereich der Einzelstück- und Kleinserienfertigung erweitert werden, und zusätzliche Marktsegmente für diese qualitativ hochwertigen Gußteile können erschlossen werden. Für die Phase der Produktentwicklung, Erprobung, konstruktiven Veränderung und Weiterentwicklung in den Industriezweigen, die derartige Gußteile einsetzen (z.B. Automobilindustrie), bedeutet diese Möglichkeit eine drastische Beschleunigung ihres Entwicklungsprozesses.

Das Verfahren hat den Vorteil, daß beliebig komplizierte Gußformen ohne vorherige Anfertigung von Modellteilen und ohne vorherige Anfertigung von Kernformen hergestellt werden können. Das Verfahren eignet sich besonders gut für Anwendungen, bei denen in kurzer Zeit kleine Stückzahlen von komplexen Bauteilen benötigt werden, wie beispielsweise im Prototypenbau der Motorenentwicklung. Der Kernformen- und Modellplattenbau mit Werkzeugkonstruktion, das Zusammensetzen der Kerne und der Arbeitsaufwand für das Aufteilen des Gesamtkerns in konventionell herstellbare Einzelkerne entfallen vollständig. Insgesamt ergibt sich eine erhebliche Zeitersparnis bei gleichzeitig erhöhter Genauigkeit der Gesamtform.

Weitere Merkmale und Zweckmäßigkeiten der Erfindung ergeben sich aus der Beschreibung von Ausführungsbeispielen anhand der Figuren.

Von den Figuren zeigen:

Fig. 1 und Fig. 2 zeigen das Formstoffsystem aus Formgrundstoff A nach Patentansprüchen 2 und 3, gemischt (Fig.1) bzw. umhüllt (Fig.2) mit dem Bindersystem nach Patentansprüchen 4 und 5.

Fig.3 zeigt den Verbund, der entsteht, wenn Systeme nach Fig.1 oder Fig.2 mittels Selective Laser Sintering und nachfolgendem Brennprozeß verarbeitet werden und, wie dies aus der Patentliteratur bekannt ist, die Komponente A an der chemischen Reaktion teilnimmt (z.B. Herstellung von keramischen Schalen und Kernen für Feinguß).

Fig.4 zeigt die Vorstufe des Verbundes nach Fig.3, vor dem Brennprozeß. Der Zusammenhalt ist nur durch das Versintern (Aufschmelzen, Infiltration, Abkühlen, Zusammenbacken) der Komponente B ohne chemische Reaktion entstanden. Dieser Verbund kann auch als (nicht als Endprodukt beabsichtigtes und nicht beanspruchtes) Zwischenstadium der hier beanspruchten Erfindung entstehen (Binderkomponente B verbleibt im A-Resol oder B-Resitol-Zustand, härtet nicht irreversibel in C-Resit aus).

Fig.5 zeigt den Sinterverbund, der aus Teilchen der Komponente A nach Brennen und Austreiben der Komp.B im Ofen entstanden ist. Zwischenstufe des aus der Literatur bekannten, sog. Sekundären Metall-Prozesses.

Fig.6 zeigt die Endstufe dieses bekannten Sekundären Metall-Prozesses, nach Infiltration des Sinterverbundes mit niedrigschmelzendem Metall.

Fig.7 zeigt die Endstufe des erfindungsgemäßen, hier beanspruchten Prozesses, bei dem eine irreversible chemische Reaktion die Harzbinder-Komponente B aushärtet (es entsteht der Zustand E) und sich die Formgrundstoff-Komponente A daran nicht beteiligt. A und B sind gießereiübliche Materialien und E bzw. der gesamte Verbund ist somit ein aus der bisherigen konventionellen Verarbeitung dieses Formstoffsystems bekanntes, erwiesen gießereitaugliches Endprodukt.

Figur 8 zeigt einen schematischen Querschnitt durch eine Vorrichtung zur Durchführung des erfindungsgemäßen Verfahrens.

Wie aus Fig. 8 ersichtlich ist, weist eine Vorrichtung zur Durchführung des Verfahrens einen auf seiner Oberseite offenen Behälter 1 mit einem oberen Rand la auf. In dem Behälter 1 befindet sich ein Träger 4 mit einer im wesentlichen ebenen und horizontalen Trägerplatte 5, die parallel zu dem oberen Rand la angeordnet ist und mittels einer nicht gezeigten Höheneinstellvorrichtung in vertikaler Richtung auf und ab verschoben und positioniert werden kann.

Über dem Behälter 1 ist eine nicht gezeigte Vorrichtung zum Auftragen einer Schicht eines härtbaren Formstoffes 3 auf die Trägerplatte 5 und zum Glätten der Oberfläche 2 der aufgetragenen Schicht des Formstoffes 3 angeordnet.

Auf der Trägerplatte 5 ist die zu bildende Gußform 6 angeordnet, wobei diese jeweils aus einer Mehrzahl von Schichten 6a, 6b, 6c, 6d von ausgehärteten Formstoff, die sich jeweils parallel zur Trägerplatte 5 erstrecken, aufgebaut ist.

Oberhalb des Behälters 1 ist eine Bestrahlungseinrichtung 7 in Form eines Infrarot-Lasers, angeordnet, die einen gerichteten Lichtstrahl 8 abgibt. Der gerichtete Laserstrahl 8 wird über eine Ablenkeinrichtung 9, beispielsweise einen Drehspiegel, als abgelenkter Strahl 10 auf die Oberfläche 2 des Formstoffes 3 in dem Behälter 1 abgelenkt. Eine Steuerung 11 steuert die Ablenkeinrichtung 9 derart, daß der abgelenkte Strahl 10 auf jede gewünschte Stelle der Oberfläche 2 des Formstoffes 3 in dem Behälter 1 auftrifft. Die Steuerung 11 ist mit einem Computer verbunden, der der Steuerung 11 die entsprechenden Daten zur Verfestigung der Schichten (6a, 6b, 6c, 6d) der Gußform 6 liefert.

Die Verfahrensweise zum Herstellen der Gußform 6 ist dabei wie folgt : zunächst wird die Geometrie des gewünschten Objektes (der Form oder des Kerns) am Computer mittels eines 3D-CAD-Systems aufbereitet. Dabei wird zweckmäßigerweise von der Konstruktion des zu fertigenden Gußteils ausgegangen, wie sie vielfach bereits in digitalisierter Form vom Kunden bereitgestellt wird.

Anschließend werden aus den so erzeugten CAD-Modelldaten durch Invertieren im Computer die Daten der anzufertigenden Gußform 6 erzeugt. Diese durch Invertierung erhaltenen Daten stellen ein Negativ des gewünschten Gußteiles dar. Dabei werden die Hohlräume des späteren Gußteiles, die sogenannten Kerne, bei der Bildung des Negatives mit berücksichtigt und können dann bei der Herstellung der Gußform als integrierte Kerne zusammen mit der Formmaske hergestellt werden.

Im CAD-Modell der zu fertigenden Gußform werden zusätzlich zu den gießtechnologisch erforderlichen Öffnungen weitere Öffnungen im zu bildenden Objekt vorgesehen, um später das Entfernen bzw. Ausschütten des nicht verfestigten Materials zu erleichtern. Diese Öffnungen werden jeweils an den für das Entfernen des Materials am besten geeigneten Stellen vorgesehen.

Beispielhaft soll hierbei die Fertigung einer Kurbelwelle für einen Verbrennungsmotor (Pkw, Motorrad) betrachtet werden. Auf die Konstruktion des Gußrohteils wird dabei im CAD-System das Schwindmaß entsprechend dem zu verwendenden Gußwerkstoff aufgegeben. Sodann werden die gießtechnologisch erforderlichen Änderungen an der Geometrie eingefügt, z.B. Zugabe von Speisern und des kompletten Anschnittsystems, bis die Geometrie der kompletten Gußteil-Gießsystem-Konfiguration lückenlos beschrieben ist. Soll die zu fertigende Form später mit weiteren vorgefertigten oder fremd bezogenen Teilen (z.B. Grundplatte, keramischer Eingußtrichter, exotherme Speiserkappe, nicht konturierte Außenteile der Form usw.; aber auch evtl. notwendige Kerne, Kühlkokillen usw.) komplettiert werden, sind diese hier auszusparen. Die fertig konstruierte Geometrie wird sodann im CAD-System invertiert, um die Geometrie der zu fertigenden Form bzw. des Kerns (des Negativs des zu fertigenden Gußteils bzw. eines Teils davon, entsprechend der Außen- oder Innenkontur) zu erhalten. Da kein Modell gezogen werden muß, sind Aushebeschrägen überflüssig, wodurch wiederum die zu fertigenden Gußteile endabmessungsnäher werden und spätere Bearbeitungsvorgänge am Gußteil entfallen können. Weiterhin können im Formteil bereits die zur Abführung der beim Gießen durch Formstoffbinder-Zerfall entstehenden gasförmigen Reaktionsprodukte notwendigen Entlüftungskanäle konstruktiv vorgesehen werden. In bestimmten Fällen kann die Form auch ungeteilt gefertigt werden, wenn der nicht durch den Laser belichtete und somit nicht ausgehärtete, noch rieselfähige Formstoff die fertige Form durch grössere Öffnungen, die später z.B. durch vorgefertigte Grundplatten oder bezogene Eingußtrichter verschlossen werden, verlassen kann. Dadurch entfallen die Toleranzen und Spiele der Formhälften gegeneinander und das Gußteil kann in engeren geometrischen Toleranzen gefertigt werden. Für Kerne, darunter auch sehr komplizierte, die konventionell wegen der geforderten Ausformbarkeit aus ihrem Werkzeug in vielen zu montierenden Einzelteilen gefertigt werden müssen, wird die einteilige und somit wesentlich genauere Herstellung die Regel sein.

Diese Geometrie des zu fertigenden Objektes bzw. der Gußform 6 wird sodann am Computer in Schichten zerlegt, deren Dicke der Korngröße des verwendeten Formstoffs angepaßt wird (z.B. doppelte mittlere Korngröße) und an die Sintermaschine übertragen. In diese ist der Formstoff eingefüllt. Der Arbeitsraum kann bis auf eine Temperatur wenige Grad unterhalb der Erweichungstemperatur bzw. des Beginns des Erweichungsintervalls des Formstoffbinders nach Anspruch 4 und 5 gleichmäßig aufgeheizt sein; jedoch wird i.d.R. auch bereits mit einem auf Raumtemperatur befindlichen Formstoff gearbeitet werden können. Eine entsprechend der eingestellten Schichtdicke aufgebrachte Formstoffschicht wird sodann mit dem Laser über ein bewegliches Spiegelsystem nach Erfordernis der Geometrie des zu der jeweiligen Höhenkoordinate gehörenden Querschnitts durch die Form/den Kern selektiv belichtet, wodurch eine ausreichende Temperatur im bestrahlten Formstoffteilchen erreicht wird und die Binderkomponente (B in Fig. 1 und Fig. 2) des Formstoffs aushärtet.

Bei dem Verfahren wird die Trägerplatte 5 zuerst in dem Behälter 1 so positioniert, daß zwischen der Oberseite der Trägerplatte 5 und der Oberfläche 2 des Formstoffes 3 in dem Behälter 1 ein gerade der vorgesehen Schichtdicke entsprechender Abstand vorliegt. Anschließend wird eine Schicht des Formstoffes 3 auf die Trägerplatte 5 aufgetragen. Die sich über der Trägerplatte 5 befindliche Schicht des Formstoffes 3 wird mittels des von der Bestrahlungseinrichtung 7 erzeugten und über die Ablenkeinrichtung 9 und die Steuereinrichtung 11 gesteuerten Laserstrahles 8, 10 an vorgegebenen, dem der Gußform 6 entsprechenden Stellen bestrahlt, wodurch der Formstoff 3 aushärtet und so eine der Gußform entsprechende feste Schicht 6a bildet. Das Bilden von weiteren Schichten 6b, 6c, 6d erfolgt sukzessive durch Absenken der Trägerplatte 5 um einen der jeweiligen Schichtdicke entsprechenden Betrag, Formstoffauftrag für jede neue Schicht und erneutes Bestrahlen an den der Gußform 6 entsprechenden Stellen. Die Schichten haben eine Dicke von 0.1mm bis 0.2mm. Der nicht vom Laserstrahl getroffene Formsand einer jeweiligen Schicht wird nicht verfestigt und dient zum Stützen der darüberliegenden Schichten. Der nichtverfestigte Formsand ist anschließend wiederverwendbar.

Beim Belichtungsvorgang ist darauf zu achten, daß eine für den Beginn der chemischen Aushärtereaktion (Polykondensation, s.o.) ausreichende Energiemenge in die auszuhärtende Formstoffpartie eingebracht wird; andernfalls werden die Formstoffpartikel nur durch oberflächliches Versintern reversibel miteinander verklebt, was zur Zerstörung des Formteils bei späterer Wärmeeinwirkung (z.B. bei einem externen Nachhärteprozeß im Ofen, spätestens jedoch beim Abguß) durch Aufhebung des Sinterverbundes führt. Derartig ohne den eigentlichen chemischen Verfestigungsmechanismus hergestellte Formteile sind gießereitechnisch nicht verwendbar.

Werden z.B. die oben erläuterten Maskenformstoffe auf Phenolharzbasis in dem hier beschriebenen Verfahren mittels Laser belichtet und zur Reaktion gebracht, kann der für die irreversible Aushärtung nötige Energieeintrag durch Beobachtung der Farbänderung des Formstoffs eingeschätzt werden.

Notwendig ist eine dunkelgelbe bis ocker/hellbraune Färbung des Formstoffs nach dem Belichten. Verbleibt der Formstoff hellgelb, so wurden B-Resitol- und C-Resit-Zustand nicht erreicht, die Partikel sind nur verklebt und der Verbund kann durch Wärmeeinwirkung leicht wieder aufgehoben werden, indem das im A-Resol-Zustand verbliebene Harz wieder aufgeschmolzen wird. Dunkelbraune Farbe mit Umschlagen in Schwarz kennzeichnet einen verbrannten Harzbinder, der ebenfalls keine Bindekraft mehr aufweist. Dunkles Ocker bis mittleres Braun weist auf maximale Festigkeit (vollständige Aushärtung) hin, jedoch können sich diese Teile als zu spröde für die bis zum Abguß der Form notwendigen Handlingprozesse erweisen.

Durch richtig gewählten Energieeintrag wird somit eine irreversible chemische Reaktion des Binders ausgelöst und eine feste, tragfähige Verbindung zwischen dem jeweils bestrahlten Formstoffteilchen und seinen es berührenden Nachbarn erzeugt. Nach Belichten einer Schicht wird die nächste Formstoffschicht aufgetragen und belichtet usw., bis der Körper vollständig erstellt ist. In nicht belichteten Stellen verbleibt dabei der unausgehärtete Formstoff als Stütze für die nächste aufgebrachte, ggf.auszuhärtende Formstoffschicht, so daß Hinterschneidungen gefertigt werden können.

Der für die chemische Reaktion der warm bzw. heiß härtenden Gießerei-Formstoffe notwendige Energieeintrag erfolgt dabei im Gegensatz zur bekannten, konventionellen Verarbeitung mittels Urformwerkzeugen nicht durch die gleichzeitige Übertragung der im aufgeheizten Urformwerkzeug gespeicherten Energie an den im Werkzeug befindlichen Formstoff und Verteilung in diesem mittels Wärmeleitung, sondern die zur Aushärtung des jeweils belichteten Formstoffpartikels erforderliche Energie wird durch den gesteuerten Laserstrahl diesem direkt übertragen, absorbiert und zur Auslösung der chemischen Reaktion des Binders verwendet, ohne das Wärmeleitungsprozesse notwendig sind. Durch diesen punktuellen, selektiven Energieeintrag und die exakte Steuerung des Laserstrahls wird es ermöglicht, daß selbst äußerst kompliziert gestaltete Formteile hergestellt werden können, ohne daß es dazu eines bereits vorher körperlich vorhandenen Abbildes ihrer Geometrie (als Positiv oder Negativ) in Form eines Modells, Musters o.ä. bedarf; Voraussetzungen für die Herstellung der Formteile sind lediglich die computerinterne Geometriedarstellung als Datensatz und der gestaltlose, rieselfähige und nach dem hier beschriebenen Reaktionsmechanismus chemisch unter Wärmeeinwirkung aushärtende Formstoff.

Die fertige Gußform wird nach Abschluß des Bauprozesses aus dem umgebenden lockeren Sandbett entnommen. Der noch unverfestigte Formsand im Inneren der Form wird durch die Eingußöffnung und/oder durch die speziell zum Entfernen des nichtverfestigten Sandes vorgesehenen Öffnungen in der Form 6 abgesaugt, herausgeschüttet oder herausgeblasen. Beim späteren Gießen fließt Gußwerkstoff in diese Öffnungen, der jedoch nach Erkalten abgeschnitten bzw. entfernt wird.

Die fertige Gußform kann zur Verbesserung der Oberflächengüte nachbearbeitet werden, beispielsweise durch thermisches Nachhärten. Durch manuelle Nacharbeit und Auftragen von Überzugsschichten kann die Oberflächenqualität der Form/des Kerns verbessert und durch eine thermische Nachbehandlung kann die Festigkeit erhöht werden. Diese Nachbehandlung kann in einem Nachhärten des Formteils mit Heißluft, in einem Ofen (bei etwa 150 bis 250 Grad Celsius für wenige Minuten, je nach Größe) oder mittels Mikrowellen bestehen. Dadurch wird erreicht, daß die irreversible chemische Reaktion, die zum Aushärten des Formstoffs führt, möglichst vollständig ablaufen kann und der Formstoff bis zu der möglichen Endfestigkeit ausgehärtet wird. Für das Beispiel des Phenolharz-Maskenformstoffs bedeutet das, daß die überwiegende Mehrheit des Binders bis in den C-Resit-Zustand ausgehärtet wird und nur die für die Plastizität nötigen Anteile im B-Resitol-Zustand verbleiben.

Bei besonders dickwandigen Formteilen können Probleme insofern auftreten, daß für eine möglichst vollständige Aushärtung (wenn für den Einsatz eine besonders hohe Festigkeit benötigt wird, z.B. im Eisenguß) ein hoher Energieeintrag notwendig ist, der z.B. durch ein mehrfaches Belichten jeder Schicht oder durch einen besonders engen Abstand der Belichtungsspuren erzielt wird. In einem solchen Fall kann der Energieeintrag ausnahmsweise Größenordnungen erreichen, die eine Wärmeleitung im Formstoff in relevanter Größenordnung verursachen, und zwar auch in Partien hinein, die nicht ausgehärtet werden sollen. Durch diese in die Tiefe abgeleitete Wärme wird es dann zu Verfestigungsreaktionen an unerwünschten Stellen und damit zum "Wachsen" des Formteils kommen. Dieser Effekt kann vermieden werden, wenn bei derart gefährdeten Teilen in jeder Schicht die äußere Konturlinie der Schnittfläche besonders stark belichtet wird, so daß entlang dieser Außenkontur der Binder gezielt verbrennt. Auch bei ausreichender Wärmeleitung über diese Kontur hinaus kann es dann nicht zu Anbackungen kommen, da der Binder an der Außenfläche des Formteils seine Bindekraft unwiderbringlich verloren hat.

Nach den Nachbehandlungsprozessen wie Nachhärten, Schlichten usw. ist die Form/der Kern fertig für die Montage/Komplettierung und den Abguß. Am Beispiel der Kurbelwelle wird die Form zweiteilig gefertigt; in Abhängigkeit von der Größe können auch beide Teile gleichzeitig gefertigt werden, wobei als Trennschicht wenige Millimeter nicht durch den Laser belichteter Formstoff vorzusehen sind. Die Formhälften können auch gekröpft sein, wenn der Versatz der Gegenmassen der Kurbelwelle dies erfordert (z.B.Sechszylindermotor) und enthalten bereits Anschnitt, Querlauf und Einlauf als Teile des Gießsystems. Nach Fertigstellung werden die Formhälften geschlichtet, mit Speiserkappen versehen, zusammengelegt, verklammert, mit einem aufgeklebten Eingußtrichter versehen, eben aufgestellt, gegen Auseinanderbrechen durch die Hitze des Gießmetalls hinterfüllt, verklammert oder in einen Gießrahmen bzw. Gießkasten eingesetzt, ggf. beschwert und sind fertig zum Abguß. Mit den nach dem hier beschriebenen Verfahren hergestellten Formteilen können auch alle weiteren, hier nicht beschriebenen, beim Gießen in verlorene Formen und/oder mit verlorenen Kernen üblichen und bekannten Techniken der Nachbehandlung der Formteile, der Komplettierung mittels gießereitechnologisch notwendigem Zubehör, des Zusammensetzens (z.B. zu einem Kernpaket), des Einsetzens in Gießkästen, Formaufnahmerahmen usw. und des Gießens selbst vorgenommen werden, in Analogie zu den Prozessen, die mit konventionell aus warm- und heißhärtenden Formstoffen hergestellten Formen und Kernen üblich sind.

Insbesondere können die derartig hergestellten Formteile als Kerne oder Formen sowie Teile davon im Sandgußverfahren und Niederdruck- und Schwerkraft-Kokillengußverfahren verwendet werden, sind aber darauf nicht beschränkt. Das Vergießen der derart hergestellten Formteile ist mit allen bekannten Gußwerkstoffen üblich. Handelt es sich um Gußwerkstoffe mit niedriger Schmelztemperatur, wie z.B. Aluminium-Silizium-Legierungen, so wird man eine geeignete Modifikation des Phenolharzbinders auswählen, um den Formstoffzerfall nach dem Gießen zu verbessern, wie man das auch bei der konventionellen Herstellung von Formteilen aus Maskenformstoffen tut. Analog wird man bei Stahlgußlegierungen einige der in Patentanspruch 19 genannten Zuschläge bei der Aufbereitung des Formstoffs zugeben (z.B. Magnetit), um Anbrand zu verhindern. Desweiteren wird es in vielen Fällen günstig sein, zur Auslegung des Gieß- und Speisesystems eine Erstarrungssimulationsrechnung vorzunehmen, da es zu den herzustellenden Prototypen-Gußteilen naturgemäß noch sehr wenige gießtechnologische Erfahrungswerte geben wird. Die Voraussetzungen datentechnischer Art für solche Simulationsrechnungen sind durch die erforderliche 3D-CAD-Konstruktion bereits gegeben. Die hierbei gefundenen Erkenntnisse zur besten Gieß- und Speisetechnik können dann bereits in die Fertigung des ersten Gußteiles einfließen, wodurch wiederum Entwicklungszeit gespart wird.

In Abhängigkeit von der Absolutgröße der Kurbelwellen können 1 bis ca. 3 Stück gleichzeitig in einer Form gefertigt werden. Die Lieferzeit für die ersten Gußteile nach abgeschlossener Konstruktion verkürzt sich an diesem Beispiel von ca. 20 Wochen auf wenige Tage bis ca. 2 Wochen. Sollten sich im Verlauf der Erprobung Konstruktionsänderungen ergeben, was wahrscheinlich ist, so sind diese innerhalb von Stunden im CAD-System zu realisieren und können innerhalb von wenigen Tagen in ein neues Gußteil umgesetzt werde, wodurch sich die Produktentwicklungszeiten dramatisch verkürzen lassen. Ist die Konstruktion ausgereift, wird für Nullserie und Großserienproduktion wie bisher ein konventionelles Urformwerkzeug erstellt, das jedoch nicht mehr geändert und in der Folge mehrerer Änderungen evtl. verworfen werden muß.

Als Formstoff 3 wird ein warmhärtender Formstoff, beispielsweise Formsand bestehend aus Quarzsand mit einem Überzug aus Phenolharz, verwendet. Der bei dem Verfahren ablaufende Prozeß des Verfestigens des Formstoffes 3 beruht auf einem von der Laserstrahlung initiierten chemischen Abbindeprozeß in der Harzhülle auf dem Quarzkorn. Es handelt sich dabei um einen von dem bekannten Sintervorgang grundsätzlich unterschiedlichen Vorgang, der in einer thermisch induzierten irreversiblen chemischen Reaktion des Bindersystems besteht. Bei dem selektiven Aushärten des Formstoffes erfolgt die Verfestigung also nur durch Verfestigung des Harzes. Der Sand, der etwa 90 bis 95% des Formstoffes ausmachen kann, ist an der in dem Verfestigungsprozeß ablaufenden chemischen Reaktion überhaupt nicht beteiligt. Ein Vorteil gegenüber dem in der US 4 247 508 beschriebenen Aufschmelzen von Sand besteht darin, daß eine wesentlich geringere Laserleistung ausreicht und daß Probleme wie Materialschwund und Verzug beim Verfestigen praktisch nicht auftreten bzw. stark reduziert sind. Die in dem Harzmaterial ablaufenden Reaktionen werden durch den Laser nur initiiert und durch die thermische Nachbehandlung zuende gebracht, so daß eine völlige Aushärtung des Harzes die Folge ist. Beim späteren Gießen des Gußteiles verbrennt das Harz und der unversehrt gebliebene Sand kann von dem Gußteil entfernt werden.

Wie aus Fig. 8 ersichtlich ist, können Hohlräume 20 des späteren Gußteils, die sogenannten Kerne der Gußform 6 bei dem Verfahren gleichzeitig mit der Gußform 6 selbst und integriert mit dieser erzeugt werden. Das herkömmliche Einlegen der Kerne in die Maskenform entfällt damit.

Das hat den Vorteil einer höheren Genauigkeit gegenüber dem bekannten Verfahren, bei dem beim Einsetzen bzw. Einlegen des Kerns oder der Mehrzahl von Kernen Formsand abgescheuert wird, was zu einer verschlechterten Paßgenauigkeit führt.

Da die Herstellung einer Mehrzahl von Einzelkernen für einen komplizierten Gesamtkern entfällt, kann eine beträchtliche Zeitersparnis bei der Herstellung von Prototypen erzielt werden. Beispielsweise benötigt die Herstellung einer Sandform für einen Prototypen eines Ölpumpengehäuses für einen PKW mittel Laser Sintering etwa 30 Stunden, während bei dem bekannten Sandgußverfahren etwa vier Wochen für den Bau von Modelleinrichtung und Kernkästen veranschlagt werden müssen.

Modifikationen des Verfahrens sind denkbar. Beispielsweise können auch zweiteilige Sandformen hergestellt werden, die anschließend wie bei dem herkömmlichen Verfahren zusammengesetzt werden. Auch ist es möglich, komplizierte Kerne für bereits vorhandene verlorene oder Dauerformen einteilig herzustellen, bei denen bisher nur die Zerlegung in mehrere Einzelkerne und anschließendes Zusammensetzen zu einem Kernpaket möglich war. Die Entfernung des noch unverfestigten Formsandes kann auch durch nachträglich in die Sandform gebohrte Öffnungen erfolgen.

Als Formstoff ist auch Zirkonsand, Olivinsand, Chromitsand, Schamotte, Korund oder Carbonsand, die jeweils entweder rein oder in beliebigen Verhältnissen mit einem oder mehreren der anderen Stoffe gemischt verwendet werden können und die jeweils mit einem geeigneten Binder versetzt sind, denkbar. Der Binder ist üblicherweise ein warm- oder heißhärtender Harzbinder, der sowohl als Überzug für den Sand als auch in Form von selbständigen Partikeln, die mit dem Sand gemischt sind, verwendet werden kann. Beispiele für geeignete Harze sind neben dem Phenolharz, Furan-, Harnstoff- oder Aminoharze, Novolake oder Resole, Harnstoff-Formaldehydharze, Furfurylalkohol-Harnstoff-Formaldehydharze, Phenol-modifizierte Furanharze, Phenol-Formaldehydharze, Furfurylalkohol-Phenol-Formaldehydharz, Acrylharze, acrylmodifizierte Phenolharze oder Polyacrylharze, die jeweils flüssig, fest, granuliert oder pulverförmig vorliegen können. Auch die Verwendung von Epoxidharzen ist denkbar. Bisher sind Epoxidharze in der Gießerei auch im Einsatz, werden aber durch Amin-Begasung ausgehärtet. Bei der thermischen Aushärtung nach dem erfindungsgemäßen Verfahren hätten sie jedoch den Vorteil der sofortigen Aushärtung bis auf Endfestigkeit.

Ein Formstoff, bestehend aus einem metallischen oder keramischen Pulver bzw. Granulat, das mit einem der oben genannten Gießereiharze umhüllt oder gemischt ist, ist ebenfalls zur Herstellung von Gußformen bzw. Modellen oder auch Dauerformen denkbar.

Da unterschiedliche Bindermaterialien jeweils auch ein unterschiedliches Absorptionsvermögen für elektromagnetische Strahlung aufweisen, ist es zweckmäßig bei der Nachbehandlung der Gußform ein selektives Nachverfestigen mit unterschiedlichen, dem Absorptionsvermögen des jeweiligen Bindermaterials angepaßten Wellenlängen durchzuführen. Beispielsweise kann die Nachhärtung der Gußformen durch Mikrowellenbestrahlung im Mikrowellenofen erfolgen. Es ist jedoch auch beispielsweise möglich, nacheinander oder gleichzeitig verschiedene Nachhärtungsverfahren anzuwenden, beispielsweise UV-Bestrahlung, Mikrowellenbestrahlung oder Erhitzen.

Als Vorrichtung zur Durchführung des Verfahrens ist jede zur Durchführung des Laser Sintering verwendbare Vorrichtung denkbar. Insbesondere ist es nicht erforderlich einen Behälter zur Aufnahme des Formstoffes zu verwenden, der Formstoff kann auch schichtweise direkt auf den Träger aufgebracht werden.

Zusammenfassend ist zu sagen, daß die hier beanspruchte Erfindung es gestattet, die Entwicklungszeiten in Gießereien, die nach dem Sandgußverfahren fertigen, drastisch zu reduzieren. Gleichzeitig wird das Angebot dieser Gießereien auf gegossene Einzelstücke im unteren Gußmassebereich erweitert. Erfindungsgemäß wird das dadurch erreicht, daß gießereiübliche, warm- und heißhärtende Formstoffe punktuell und selektiv mittels Laser zur irreversiblen, chemischen Aushärtung gebracht werden, wobei der Formgrundstoff chemisch inert verbleibt und es möglich wird, komplexe, gießereitaugliche Kerne und Formen ohne die Verwendung von Urformwerkzeugen herzustellen. Als besonderer Vorteil der Erfindung ist festzustellen, daß alle verwendeten Komponenten des Formstoffsystems in den Gießereien seit langem bekannt und bewährt sind. Ihr Verhalten beim Gießen ist bekannt, so daß hier keine zusätzlichen Risiken oder Schwierigkeiten beim Markteintritt zu erwarten sind.

Auf einige weitere Ausführungsformen der Erfindung soll noch verwiesen werden. So ist es natürlich möglich, auch Partikel aus anderen Materialien als den hier in Anspruch 2 bzw. 3 genannten Formgrundstoffen mit den Bindersystemen nach Patentansprüchen 4 oder 5 zu umhüllen oder zu vermischen und wie oben beschrieben mittels Laser zur Aushärtung zu bringen. Das könen z.B. auch Metall- und Keramikteilchen sein, wobei sich die Weiterentwicklung zum bekannten Stand der Technik daraus ergibt, daß die chemisch inert verbleibenden Partikel A (Fig.1 bzw. Fig.2) mittels irreversibler chemischer Reaktion des Bindersystems B (durch Polykondensation) - und nicht durch Versintern und/oder chemische Reaktion mit Beteiligung der Partikel A selbst - zum Verbund aus Partikeln A und irreversibel gehärtetem Binder E entsprechend Fig.7 gebracht werden. Die damit hergestellten Objekte wären beispielsweise für den Gießereieinsatz als Dauermodelle geeignet, aber darauf nicht beschränkt.

Desweiteren ist es möglich, die hier besprochenen erfindungsgemäßen Formgrundstoffe, in Mischung oder umhüllt mit den hier besprochenen erfindungsgemäßen Bindersystemen, flächig mittels einer Maske und nicht punktuell bzw. rasterförmig mit einem Laser zu belichten, wobei der gleiche Härtungsmechanismus ausgelöst wird. Die Maske muß vor dem Belichtungsprozeß mit dem der aktuellen Höhenkoordinate entsprechenden Querschnitt durch das zu bauende Teil präpariert worden sein. Die Energiequelle ist nach Strahlungsintensität und Wellenlänge geeignet auszuwählen. Insbesondere eignet sich diese Ausführungsform der Erfindung für eine Kleinserienfertigung, wenn durch die präparierte Maske nacheinander jeweils dieselbe Formstoffschicht in mehreren in der Maschine vorhandenen Bauräumen belichtet wird, bevor die Maske mit dem nächsten Querschnitt präpariert wird.

## Patentansprüche

1. Verfahren zum Herstellen eines dreidimensionalen Objektes, wobei das Objekt (6) eine Gußform ist, mit den Schritten:
Erzeugen eines Computermodells der Gußform (6), Aufbringen und Verfestigen einer Schicht (6a) eines pulverförmigen, mittels elektromagnetischer Strahlung verfestigbaren Formstoffes (3) an jeweiligen dem Querschnitt der Gußform (6) entsprechenden Stellen mittels entsprechend dem Computermodell gesteuerter Einwirkung elektromagnetischer Strahlung (8) und
wiederholtes Aufbringen und Verfestigen einer Schicht (6b, 6c, 6d) des Formstoffes (3) an den jeweiligen dem Querschnitt der Gußform (6) entsprechenden Stellen mittels der elektromagnetischen Strahlung (8) auf der jeweils zuvor verfestigten Schicht (6a, 6b, 6c),
dadurch gekennzeichnet, daß zuerst mittels eines Computers ein Positivmodell erzeugt wird und anschließend die Daten des Computermodells der herzustellenden Gußform durch Invertieren des Positivmodells erzeugt werden und
daß als Formstoff (3) Formsand verwendet wird, der einen mit einem warm- oder heizhärtenden Harzbinder versetzten Sand umfaßt und wobei die Bestrahlungsdauer und/oder die Intensität der elektromagnetischen Strahlung so gewählt wird, daß der Energieeintrag der elektromagnetischen Strahlung in den zu verfestigenden Formsand zur Initiierung des chemischen Aushärteprozesses in dem Harzbinder ausreichend ist, während der Sand noch nicht reagiert.

2. Verfahren nach Anspruch 1, dadurch gekennzeichnet, daß als Formsand Quarzsand mit einem Überzug aus Phenolharz verwendet wird.

3. Verfahren nach Anspruch 1, dadurch gekennzeichnet, daß der Formsand Quarzsand, Zirkonsand, Olivinsand, Chromitsand, Schamotte, Korund- oder Carbonsand oder Quarzgut umfaßt, der jeweils mit einem geeigneten warm- oder heißhärtbarem Harzbinder entweder gemischt oder umhüllt ist.

4. Verfahren nach Anspruch 3, dadurch gekennzeichnet, daß der warm- oder heißhärtbare Harzbinder ein Harz aus der Gruppe der Furan-, Harnstoff- oder Aminoharze, Harnstoff-Formaldehyd-Harze, Furfurylalkohol-Harnstoff-Formaldehydharze, Phenolmodifizierten Furanharze, Phenol-Formaldehydharze, Furfurylalkohol-Phenol-Formaldehydharze, acrylmodifizierte Phenolharze, Acrylharze oder Polyacrylharze umfaßt, die jeweils in flüssiger, fester, granulierter oder pulverförmiger Form vorliegen können.

5. Verfahren nach Anspruch 3, dadurch gekennzeichnet, daß als Harzbinder ein Epoxidharz verwendet wird.

6. Verfahren nach einem der Ansprüche 1 bis 5, dadurch gekennzeichnet,
daß eine Gußform mit integriertem Kern (20) erzeugt wird.

7. Verfahren nach einem der Ansprüche 1 bis 6, dadurch gekennzeichnet,
daß die Gußform (6) einteilig erzeugt wird.

8. Verfahren nach einem der Ansprüche 1 bis 7, dadurch gekennzeichnet,
daß die Gußform (6) mit einem Einguß erzeugt wird.

9. Verfahren nach einem der Ansprüche 1 bis 8, dadurch gekennzeichnet,
daß unverfestigter Formsand (3) nach der Verfestigung über in der Gußform vorgesehene Öffnungen entfernt wird.

10. Verfahren nach einem der Ansprüche 1 bis 9, dadurch gekennzeichnet,
daß ein Kern getrennt erzeugt wird.

11. Verfahren nach Anspruch 10, dadurch gekennzeichnet,
daß ein einteiliger Kern für eine Gußform (6) erzeugt wird.

12. Verfahren nach einem der Ansprüche 1 bis 11, dadurch gekennzeichnet,
daß als elektromagnetische Strahlung Laserstrahlung verwendet wird.

13. Verfahren nach Anspruch 12, dadurch gekennzeichnet,
daß Strahlung eines Infrarot-Lasers (7) verwendet wird.

14. Verfahren nach einem der Ansprüche 1 bis 13, dadurch gekennzeichnet, daß
die Gußform thermisch nachgehärtet wird.

15. Verfahren nach einem der Ansprüche 1 bis 14, dadurch gekennzeichnet, daß
die Gußform durch Bestrahlung mit Mikrowellen nachgehärtet wird.

16. Verfahren nach einem der Ansprüche 9 bis 15, dadurch gekennzeichnet, daß
die Öffnungen beim Erzeugen des Computermodelles der Gußform (6) erzeugt werden.

17. Verfahren nach einem der Ansprüche 12 bis 16, dadurch gekennzeichnet, daß
bei der Verfestigung des Formsandes ein vom Laser initiierter chemischer Abbindeprozeß in dem Harzbinder abläuft und der Sand chemisch nicht an der Reaktion beteiligt ist.

18. Verfahren nach Anspruch 17, dadurch gekennzeichnet, daß die Kontrolle des chemischen Aushärteprozesses über die Farbänderung des Formstoffes erfolgt und gegebenenfalls die Bestrahlungsdauer und/oder die Intensität nachjustiert wird.

## Claims

1. Process for producing a three-dimensional object, the object (6) being a casting mould, having the steps:
generating a computer model of the casting mould (6),
applying and solidifying a layer (6a) of a powdery moulding material (3) which can be solidified by means of electromagnetic radiation at respective points corresponding to the cross section of the casting mould (6) by means of the action, controlled in accordance with the computer model, of electromagnetic radiation (8) and
repeatedly applying and solidifying a layer (6b, 6c, 6d) of the moulding material (3) at the respective points corresponding to the cross section of the casting mould (6) by means of the electromagnetic radiation (8), on the respectively previously solidified layer (6a, 6b, 6c),
characterized in that firstly, a positive model is generated by means of a computer and then the data of the computer model of the casting mould to be produced are generated by inverting the positive model, and
in that the moulding material (3) used is moulding sand which consists of a sand with which a warm-curing or heat-curing resin binder has been mixed, and the duration of the radiation and/or the intensity of the electromagnetic radiation being selected such that the input of energy from the electromagnetic radiation into the moulding sand to be solidified is sufficient to initiate the chemical curing process in the resin binder, while the sand does not yet react.

2. Process according to Claim 1, characterized in that the moulding sand used is quartz sand with a covering of phenolic resin.

3. Process according to Claim 1, characterized in that the moulding sand consists of quartz sand, zirconium sand, olivine sand, chromite sand, fire clay, corundum or carbon sand or quartz material, which is in each case either mixed or encapsulated with a suitable warm-curing or hot-curing resin binder.

4. Process according to Claim 3, characterized in that the warm-curing or hot-curing resin binder comprises a resin from the group of furan, urea or amino resins, urea-formaldehyde resins, furfuryl alcohol-urea-formaldehyde resins, phenol-modified furan resins, phenol-formaldehyde resins, furfuryl alcohol-phenol-formaldehyde resins, acrylic-modified phenolic resins, acrylic resins or polyacrylic resins, which can in each case be present in liquid, solid, granular or powder form.

5. Process according to Claim 3, characterized in that the resin binder used is an epoxy resin.

6. Process according to one of Claims 1 to 5, characterized in that a casting mould with an integrated core (20) is produced.

7. Process according to one of Claims 1 to 6, characterized in that the casting mould (6) is produced in one piece.

8. Process according to one of Claims 1 to 7, characterized in that the casting mould (6) is produced with a pouring gate.

9. Process according to one of Claims 1 to 8, characterized in that following the solidification, unsolidified moulding sand (3) is removed via openings provided in the casting mould.

10. Process according to one of Claims 1 to 9, characterized in that a core is produced separately.

11. Process according to Claim 10, characterized in that a one-piece core for a casting mould (6) is produced.

12. Process according to one of Claims 1 to 11, characterized in that the electromagnetic radiation used is laser radiation.

13. Process according to Claim 12, characterized in that radiation from an infrared laser (7) is used.

14. Process according to one of Claims 1 to 13, characterized in that the casting mould is thermally post-cured.

15. Process according to one of Claims 1 to 14, characterized in that the casting mould is post-cured by means of irradiation with microwaves.

16. Process according to one of Claims 9 to 15, characterized in that the openings are produced during the generation of the computer model of the casting mould (6).

17. Process according to one of Claims 12 to 16, characterized in that during the solidification of the moulding sand, a chemical bonding process initiated by the laser proceeds in the resin binder, and the sand is not chemically involved in the reaction.

18. Process according to Claim 17, characterized in that the chemical curing process is monitored via the colour change to the moulding material and, if necessary, the duration of irradiation and/or the intensity are readjusted.

## Revendications

1. Procédé pour fabriquer un objet tridimensionnel, l'objet (6) étant un moule de fonte, avec les étapes :
création d'un modèle informatique du moule de fonte (6), application et solidification d'une couche (6a) d'une substance de moule (3) sous forme de poudre, pouvant être solidifiée au moyen d'un rayonnement électromagnétique au niveau des positions respectives correspondantes à la section du moule de fonte (6) au moyen de l'effet d'un rayonnement électromagnétique (8) piloté d'une façon correspondante au modèle informatique et
application et solidification répétées d'une couche (6b, 6c, 6d) de la substance de moule (3) au niveau des positions respectives correspondantes à la section du moule de fonte (6) au moyen de l'effet d'un rayonnement électromagnétique (8) sur la couche respectivement solidifiée préalablement (6a, 6b, 6c),
caractérisé en ce qu'un modèle positif est créé d'abord au moyen d'un ordinateur et qu'ensuite les données du modèle informatique du moule de fonte à produire sont créées au moyen d'une inversion du modèle positif et
que du sable de moule est utilisé comme substance de moule (3) qui comprend un sable mélangé avec un liant de résine durcissable à température modérée ou élevée, et la durée d'irradiation et/ou l'intensité du rayonnement électromagnétique étant choisies de sorte que l'apport d'énergie du rayonnement électromagnétique dans le sable de moule à solidifier est suffisant pour amorcer le processus de durcissement chimique dans le liant de résine, pendant que le sable ne réagit pas encore.

2. Procédé selon la revendication 1, caractérisé en ce que le sable de quartz en tant que sable de moule est utilisé avec un revêtement de résine phénolique.

3. Procédé selon la revendication 1, caractérisé en ce que le sable de moule englobe le sable de quartz, le sable de zircone, le sable d'olivine, le sable de chromite, la chamotte, le sable de corindon ou de carbone ou les sables quartzeux, qui est mélangé ou enveloppé respectivement d'un liant de résine approprié durcissable à température modérée ou élevée.

4. Procédé selon la revendication 3, caractérisé en ce que le liant de résine durcissable à température modérée ou élevée englobe une résine dans le groupe des résines furanne, urée ou amino, les résines urée/formaldéhyde, les résines alcool furfurylique/urée/formaldéhyde, les résines furanne à modification phénolique, les résines phénol/formaldéhyde, les résines alcool furfurylique/phénol/formaldéhyde, les résines phénoliques à modification acrylique, les résines acryliques ou polyacryliques, qui peuvent exister respectivement sous forme liquide, solide, granulée ou pulvérulente.

5. Procédé selon la revendication 3, caractérisé en ce qu'une résine époxy est utilisée comme liant de résine.

6. Procédé selon l'une quelconque des revendications 1 à 5, caractérisé en ce qu'un moule de fonte est créé avec un noyau intégré (20).

7. Procédé selon l'une quelconque des revendications 1 à 6, caractérisé en ce que le moule de fonte (6) est créé d'une seule pièce.

8. Procédé selon l'une quelconque des revendications 1 à 7, caractérisé en ce que le moule de fonte (6) est créé avec un jet de coulée.

9. Procédé selon l'une quelconque des revendications 1 à 8, caractérisé en ce que le sable de moule non solidifié (3) est éliminé après la solidification, par les ouvertures prévues dans le moule de fonte.

10. Procédé selon l'une quelconque des revendications 1 à 9, caractérisé en ce qu'un noyau est créé séparément.

11. Procédé selon la revendication 10, caractérisé en ce qu'un noyau d'une seule pièce est créé pour un moule de fonte (6).

12. Procédé selon l'une quelconque des revendications 1 à 11, caractérisé en ce qu'un rayonnement laser électromagnétique est utilisé.

13. Procédé selon la revendication 12, caractérisé en ce que le rayonnement d'un laser infrarouge (7) est utilisé.

14. Procédé selon l'une quelconque des revendications 1 à 13, caractérisé en ce que le moule de fonte est ultérieurement thermodurci.

15. Procédé selon l'une quelconque des revendications 1 à 14, caractérisé en ce que le moule de fonte est durci ultérieurement à l'aide d'une irradiation par micro-ondes.

16. Procédé selon l'une quelconque des revendications 9 à 15, caractérisé en ce que les ouvertures sont créées lors de la création du modèle informatique du moule de fonte (6).

17. Procédé selon l'une quelconque des revendications 12 à 16, caractérisé en ce que, lors de la solidification du sable de moule, un processus de liaison chimique amorcé par le laser se déroule dans le liant de résine et que le sable ne participe pas chimiquement à la réaction.

18. Procédé selon la revendication 17, caractérisé en ce que le contrôle du processus de durcissement chimique s'effectue à l'aide de la variation de couleur de la substance de moule et éventuellement la durée d'irradiation et/ou l'intensité sont ajustées a posteriori.
